# EUROPEAN PATENT APPLICATION

(11) **EP 2 874 095 A1**
(43) Date of publication of application: **20.05.2015**
(21) Application number: 13306544.1
(22) Date of filing: 13.11.2013
(51) Int. Cl.: G06K 7/10

(54) **Method, device and system for accessing a contact-less service**

(71) Applicant: Gemalto SA, 92190 Meudon (FR)
(72) Inventor: Capomaggion, Grégory, 13705 La Ciotat (FR); Buton, Christophe, 13705 La Ciotat (FR); Pourchier, Nicolas, 13705 La Ciotat (FR); Pin, Yannick, 13705 La Ciotat (FR)

(57) **Abstract**

The invention relates to a method 20 for accessing a contact-less service.

According to the invention, the method comprises the following steps. A first device 14 determines information, as a coupling location, about a location relating to an antenna coupling. The antenna coupling involves an antenna comprised within either the first device or a second device 12 connected to the first device. And the first device presents, through a user interface 142, at least one information item, as first information item, about the coupling location.

The invention also relates to corresponding first device and system.

## Description

### Field of the invention:

The invention relates, in a general manner, to a method for accessing a contact-less service.

Furthermore, the invention also pertains to a device for accessing a contact-less service.

Finally, the invention relates to a system for accessing a contact-less service as well.

The present invention is notably applicable to a mobile device that may host one or several Secure Elements (SE), like an embedded Universal Integrated Circuit Card (or eUICC), a smart card, such as a Subscribed Identity Module (or SIM) type card, a Secure Digital (or SD) type card, a micro SD type card, a mini SD type card and/or a Secure Memory type Card (or SMC), as token.

Within the present description, a token is a smart electronic object that is intended to communicate with the outside world.

Within the present description, the term "service" refers notably to an application that is supported (or to be supported) by at least one entity, like a user terminal that may cooperate with a token, a user terminal or a token, as standalone entity.

Within the present description, the adjective "contact-less" used within the expression "contact-less service" means notably that the service is accessible via a Short Range (or SR) Radio-Frequency (or RF) link by using, for example, International Standardization Organization/ International Electro-technical Commission (or ISO/IEC) 14 443 specifications, a Ultra High Frequency Radio-Frequency IDentification (or UHF RFID) technology or the like.

### State of the art:

As known per se, a Near Field Communication (or NFC) (enabled) device allows its user to benefit from a contact-less service, over an NFC channel, between the NFC device and an external NFC (enabled) device.

However, a contact-less application supported at the NFC device is well executed only if the NFC device is positioned in such a manner that an antenna relating to the NFC device is effectively coupled, in an electromagnetic manner, to an antenna relating to the external NFC device.

When the NFC device antennas are really electromagnetically coupled, a contact-less transaction is carried out between the NFC device and the external NFC device.

A need of an electromagnetic coupling implies therefore that the NFC device user knows where the antenna coupling is located.

Such an antenna coupling location knowledge requires a user to be a technical expert.

The antenna coupling location knowledge allows the NFC device user to better position the NFC device with respect to the external NFC device, so as to let the NFC devices communicate in a contact-less manner.

Thus, there is a need that the NFC device user knows an antenna coupling location, in order to allow a contact-less communication between the NFC devices.

### Summary of the invention:

The invention proposes a solution for satisfying the just hereinabove specified need by providing a method for accessing a contact-less service.

According to the invention, the method comprises the following steps. A first device determines information, as a coupling location, about a location relating to an antenna coupling. The antenna coupling involves an antenna comprised within either the first device or a second device connected to the first device. And the first device presents, through a user interface, at least one information item, as first information item, about the coupling location.

The principle of the invention consists in that, firstly, a first device identifies information relating to a location pertaining to an antenna coupling involving an antenna that is incorporated within either the first device or a second device associated with the first device. Then, the first device indicates to a first device user the antenna coupling location information.

For sake of clarity and conciseness, such information relating to an antenna coupling location is termed herein after coupling location.

The first device user knows the coupling location and is thus better able to position the first device with respect to an interlocutor device, like a so termed Point Of Sale (or POS) reader that is contact-less.

Contrary to the known solution, the first device user does not need to be a technical expert, so as to place the first device with respect to an external interlocutor device that allows communicating in a contact-less manner.

The invention solution makes it possible to run or execute a contact-less application(s) in an operational manner.

It is to be noted that the contact-less application(s) may be supported by the first device or the second device irrespective of the coupling location.

The proposed solution does not require any technical expertise of a first device user.

The proposed solution allows providing easily a first device user with information relating a coupling location that allows exchanging, in a contact-less manner, data with an external interlocutor device.

The proposed solution informs automatically the user and is therefore user friendly.

The proposed solution allows making it easier to let communicate either the first device or the second device, over a contact-less channel, with an external interlocutor device.

According to a further aspect, the invention is a first device for accessing a contact-less service.

According to the invention, the first device is adapted to determine information, as a coupling location, about a location relating to an antenna coupling. The antenna coupling involving an antenna comprised within the first device. And the first device is adapted to present, through a user interface, at least one information item, as first information item, about the coupling location.

As to the first device, it may be any kind of device that is able to communicate with a contact-less communicating device. It may be a user terminal or a token.

The user terminal may be portable, like, for instance, a mobile handset, a mobile (tele)phone, a smart phone, a Personal Digital Assistant (or PDA), a camera, a Global Positioning System (or GPS) type navigation device, an audio player, a video player, a media player, a game player, a portable Personal Computer (or PC), a laptop, a portable TeleVision (or TV) set, a tablet computer, a netbook and/or an electronic mobile equipment (e.g.: glasses, a watch or a jewel).

According to still an additional aspect, the invention is a system for accessing a contact-less service.

According to the invention, the system comprises a first device and at least one second device connected to the first device. The first device is adapted to determine information, as a coupling location, about a location relating to an antenna coupling. The antenna coupling involves an antenna comprised within the second device. And the first device is adapted to present, through a user interface, at least one information item, as first information item, about the coupling location.

A first device may be a user terminal or a token while a second device may be a token.

The invention does not impose any constraint as to a kind of the token(s).

The token(s) may be fixed to or removable from a host device.

As removable token, it may be a smart watch, a smart jewel, a smart card, like a (possibly micro or mini) SD type card or a Multi-Media type Card (or MMC), a SIM type card, a Secure Removable Module (or SRM), a smart dongle of the USB (acronym for "Universal Serial Bus") type or any format card to be connected to a host device.

### Brief description of the drawings:

Additional features and advantages of the invention will be more clearly understandable after reading a detailed description of one preferred embodiment of the invention, given as one indicative and non-limitative example, in conjunction with the following drawings:

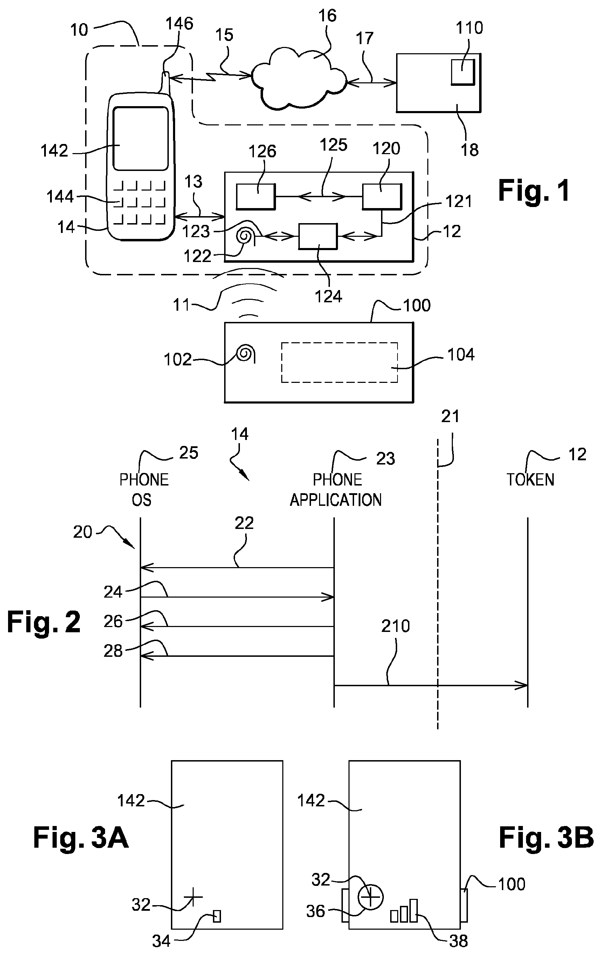

- Figure 1 represents a simplified diagram of one exemplary embodiment of a system for accessing a contact-less service, the system including a mobile phone, as user terminal, and a token coupled to the terminal, the terminal being adapted to determine and present to the terminal user information relating to an (antenna) coupling location, according to the invention;
- Figure 2 illustrates a simplified message flow of one exemplary embodiment of a method implemented notably by the different entities of the figure 1, so that, further to a coupling location information presentation, the terminal requests the token to launch an execution of a contact-less application; and
- Figures 3A and 3B show two exemplary embodiments of a display screen that displays both a coupling location and a presence of a power with a low and a sufficiently high level of a signal that is received by the terminal to allow a contact-less communication with the token respectively.

### Detailed description:

Herein under is considered a case in which the invention method for accessing a contact-less service is implemented by an NFC (enabled) terminal including a user terminal, as first device for accessing a contact-less service, and a smart card, as second device and token, which embeds a contact-less antenna.

However, the invention method for accessing a contact-less service may be implemented by an NFC terminal, as first device for accessing a contact-less service, that incorporates a contact-less antenna. In other words, the NFC terminal does not cooperate with any external token, so as to access a contact-less service. According to such an embodiment (not represented), the NFC terminal is adapted, so as to exert, on its own, the functions that are carried out by the terminal and the token and that are described herein below.

**Figure 1** shows one embodiment of an electronic system 10 for accessing a Contact-Less (or CL) service, a CL (communicating) device 100 and a remote server 18.

The CL device 100 is separated from the system 10 for accessing a CL service.

The CL device 100 is present at a geographical location at which one or several CL services may be accessed.

The CL service(s) may be any type of service. The CL service(s) may include a transportation type service(s), a ticketing type service(s), a banking/finance type service(s), a mobile communication type service(s), a loyalty type service(s), a payment type service(s), an e-government type service(s), an access control type service, a data exchange type service and/or an information type service(s).

The CL device may be a Radio Frequency IDentification (or RFID) tag, a CL reader, a CL POS reader or the like.

The CL device 100 may be or not connected to a communication network, as a backend system (not represented) and an NFC infrastructure.

The CL device 100 includes at least one antenna, as first antenna 102, for communicating, over a Short Range (or SR) Radio Frequency (or RF) link 11, with an external antenna included within or at an NFC (enabled) user terminal, as an interlocutor device.

The first antenna 102 is able to receive data from and send data to outside through a bi-directional SR RF link 11. The first antenna 102 allows communicating data over a contact-less channel.

The frequency of the SR RF link 11 may be fixed at, for example, 13, 56 MHz.

The CL device 100 may be located near to or on a medium on which information relating to access to a CL service may be published.

The CL device 100 includes preferably a display screen 104 and/or a loudspeaker (not represented), as a CL device Man Machine Interface (or MMI). Such a CL device MMI allows giving information to a user who desires to access a CL service.

The medium or the CL device MMI publishes information that is thus accessible to any CL interlocutor device user. As information, there is preferably information about a location relating to an antenna coupling that involves the first antenna 102 comprised within the CL device 100.

The CL device 100 may be able to supply energy, while emitting an SR RF signal, to an external NFC interlocutor device, like a token included within a mobile equipment assembly, as a system 10 for accessing a CL service.

The system 10 for accessing a CL service includes an NFC enabled mobile phone 14, as a first device, and a micro SD type smart card 12, as a second device, that is connected to the NFC enabled mobile phone 14.

The system 10 may further include a so-termed Over-The-Air (or OTA) or Over-The-Internet (or OTI) server 18, as a remote server.

For sake of clarity, the system 10 for accessing a CL service, the micro SD type smart card 12, the NFC enabled mobile phone 14 and the OTA or OTI server 18 are termed herein after the system 10, the token 12, the phone 14 and the server 18 respectively.

The token 12 belongs to a user, namely a phone user.

The token 12 is preferably a smart object that is intended to communicate with the outside world.

The token 12 includes a contact Input/Output (or I/O) interface, so as to let communicate, through a bi-directional contact (or a wire) link 13, the token 12 and a host device, like the phone 14. The communication between the token 12 and the phone 14 is used preferably for benefiting from a host device MMI.

The token 12 is any electronic medium that may have different form factors.

For example, instead of being included within a micro SD type smart card, the token 12 may be embodied within a SIM type smart card, such as a UICC, a MMC, a smart dongle of the USB type, a smart watch, a smart jewel or a chip to be fixed or soldered, possibly in a removable manner, to an host device.

The chip fixed to the host device may be an NFC chip, as a CL chip incorporated within the phone 14. The NFC chip, or termed Contact-Less Front end (or CLF) chip, is soldered on a Printed Circuit Board (or PCB) of the phone 14. The NFC chip plays a role of a CL modulator-demodulator (or modem) for the phone 14. The NFC chip is connected to, on the one hand, a second antenna 122 incorporated within the phone 14 and configured to exchange data with an external CL interlocutor device, and, on the other hand, the phone microprocessor.

According to a particular embodiment, the token 12 incorporates, as separate chips or modules, a secure element 120, one antenna, as second antenna 122, a modem 124 and a memory controller 126.

The secure element 120, the second antenna 122 and the modem 124 may be separated from the memory controller 126, i.e. none of the secure element 120, the second antenna 122 and the modem 124 is connected to the memory controller 126.

The secure element 120 includes at least one microprocessor (not represented), as data processing means, at least one memory (not represented), as data storing means, and two I/O interfaces (not represented).

The secure element 120 memory(ies) may include one or several EEPROM (for "Electrically Erasable Programmable Read-Only Memory"), one or several ROM (for "Read Only Memory"), one or several Flash memories and/or any other memory(ies) of different types, like one or several RAMs (for "Random Access Memory").

The secure element 120 memory(ies) stores data, as user data.

The user data may include a first name, a last name, a birth date, a personal picture(s), a user identifier, a mail address of the user, a telephone number of the user, an email address of the user, a Session Initiation Protocol (or SIP) address of the user, a telecopy number of the user, a key(s) Ki associated with the user identifier, a PIN(s), a biometrics print(s) and/or other appropriate data.

The key Ki and/or an associated key may be shared with another external entity(ies), like the phone 14, the CL device 100 and/or the server 18.

The key Ki or the associated key may be used as an encryption key for encrypting data to be sent to the external entity with a predetermined encryption algorithm, like a Milenage type algorithm.

The secure element 120 memory(ies) stores preferably data relating to an access to one or several CL applications.

As a security feature(s), it may include user authentication data relating to one or several CL applications and/or one or several keys relating to one or several CL applications.

As an RF parameter(s) relating to one or several CL applications, it may include data relating to an ISO 14 443 type A or B protocol.

The secure element 120 is connected, through a bi-directional wire link 121, to the modem 124.

The secure element 120 is connected, through the modem 124, to the second antenna 122.

The secure element 120 supports preferably one or several CL applications, i.e. applications that are accessible through a bi-directional SR RF link 11.

A CL application allows exchanging data between the CL device 100, the token 12, and possibly, through the phone 14 MMI, a phone user.

The CL application may be organized in a hierarchical structure in which there are a root, one or several Data Files (or DF) and/or Elementary Files (or EF) that is(are) directly or indirectly connected to the root.

The CL application(s) may be written in an object-oriented language, such as Java or Javacard, also termed applet when developed in Java.

An execution of a CL application may be triggered automatically by data that is transmitted from the CL device 100 and/or a user selection of the CL application within a menu, a browser or a server that is embedded within the secure element 120.

The embedded menu, browser or server lists a part of or all the CL applications supported by the secure element 120.

Alternately, instead of the secure element 120, the phone 14 supports one or several CL applications.

The secure element 120 manages preferably a protocol for communicating data between the token 12 and an external CL interlocutor device.

Alternately, instead of the secure element 120, the modem 124 manages a protocol for communicating data between the token 12 and an external CL interlocutor device.

The second antenna 122 allows exchanging, through a bi-directional SR RF link 11, with an external CL interlocutor entity(ies), data transported by an SR RF signal.

The second antenna 122 may be of planar or non-planar type. As known per se, when the second antenna 122 is of the planar type, the second antenna 122 generates a field that is perpendicular to the plan of the second antenna 122, i.e. the plan of the token body. When the second antenna 122 is of the non-planar type, the second antenna 122 generates a field that is not perpendicular to the plan of the token body.

As non-planar type antenna, it may be a solenoid.

The modem 124 plays a CL demodulation role and a CL modulation role.

The modem 124 demodulates a received analogical carrier signal to decode encoded digital information that is received, over the second antenna 122, from an external CL interlocutor device and to be transmitted digitally to the secure element 120.

The modem 124 modulates an analogical carrier signal to encode digital information received from the secure element 120 and to be transmitted analogically, over the second antenna 122, to an external CL interlocutor device.

The modem 124 may further play a role of a signal amplifier by which the modem 124 amplifies a signal received, over the second antenna 122, from an external CL interlocutor device.

The secure element 120 is connected, through a bi-directional wire link 125, to the memory controller 126.

The memory controller 126 includes a controller, a non-volatile memory, e.g. Flash type memory, and a contact Input/Output (or I/O) interface with a (token) host(ing) device, like the phone 14.

Alternately, instead of the memory controller 126, the secure element 120 includes a contact I/O interface with a host device.

The memory controller 126 is preferably connected, over the contact I/O interface, through a bi-directional contact (or a wire) link 13, to the host device 14.

The token 12 may further incorporate a memory chip, e.g. a NAND memory chip, that is connected to the memory controller 126, so as to increase a memory capacity relating to the token 12.

The secure element 120 executes preferably one or several security functions, in order to protect access to user information stored and managed through or by the token 12.

The security functions may include a user authentication process to be used before accessing any CL application, as executable data stored within the token 12.

To authenticate the token user, the secure element 120 stores an application for verifying data, such as a Personal Identity Number (or PIN) and/or a biometric print(s) (like a finger print(s), a facial print(s) and/or a iris print(s)), that is securely stored within the secure element 120 and to be input by the token user. The secure element 120 compares thus data input by the token user to the stored data. The secure element 120 authorizes, when the token user is successfully verified, a running of one or several CL applications supported by the token 12 (or the phone 14).

The security functions include preferentially an encryption/decryption process to be used before sending/receiving data, so as to protect access to data exchanged between the token 12 and an external device, like a host device, a CL device 100 and/or a server 18.

The secure element 120 is able to execute any supported CL application.

The secure element 120 is preferably able to initiate actions, in order to interact directly with the outside world, in an independent manner of the host device. Such a capacity of interaction at the initiative of the secure element 120 is also known as proactive capacity. The secure element 120 is thus enable to send, at its own initiative, to the phone 14 a proactive command, also known as "Display text", for displaying, through a phone display screen 142, some message and/or another command for requesting a user input, through the phone 14 MMI.

The phone 14 may be any device including means for processing data, comprising or being connected to means for interfacing with a user, as a MMI, like a display screen 142, a keyboard 144 and/or a loudspeaker (not represented), comprising or being connected to means for storing data.

A phone 14 housing has preferably one or several slots to receive, each, a removable card that may be smart and/or one or several ports, like a (possibly mini) USB port, to receive, each, a dongle, as token.

The phone 14 accommodates at least in part the token 12. The phone 14 may accommodate one or more additional tokens (not represented).

The phone 14 is able to know whether the token 12 is or is not connected to the phone 14.

The phone 14 includes preferably one battery(ies) (not represented), one or several microprocessors (not represented), as data processing means, one or several memory(ies) (not represented), as data storing means, and at least two I/O interfaces.

The phone microprocessor processes data originating from either the phone memory or an external entity.

The phone microprocessor executes at least one Operating System (or OS).

The phone microprocessor executes at least one application for accessing one or several CL applications supported by the token 12, so as to interact with a CL application and the phone user.

The phone memory stores data, like user data, and applications including executable data.

The phone I/O interfaces includes, among others, one I/O interface, so as to exchange data with the token 12.

The phone I/O interface with the token 12 is preferably a contact interface when the token 12 is accommodated within a phone 14 housing. Such a contact interface allows exchanging, through a bi-directional contact link 13, data between the phone 14 and the token 12.

Instead of a contact interface, the phone I/O interface with the token 12 is a contact-less interface.

According to an important invention feature, the phone 14 is configured to determine information, as coupling location, about a location relating to an antenna coupling.

The phone 14 determines the coupling location based on one or several identifiers relating to the phone 14 and/or one or several identifiers relating to the token 12.

The antenna coupling involves a second antenna 122 comprised within the token 12 that is connected to the phone 14. The antenna coupling is a coupling between a first antenna 102 that is not physically connected to the token 12 or the phone 14 and the second antenna 122 that is physically connected to the token 12 and/or the phone 14, i.e. included within the phone 14.

The coupling location may be of any type, like e.g. coupling location coordinates, such as Cartesian or polar coordinates with respect to one or several axis (horizontal, vertical or polar) that coincides with a line relating to the phone display screen 142.

The coupling location may be somewhere within the phone housing or close to the phone 14, i.e. up to few centimetres, e.g. 4 cm, around the phone 14.

Such a coupling location does not match necessarily information relating to a real second antenna 122 location. Such a coupling location is preferably related to a location where there is an effective electromagnetic coupling between the first antenna 102 relating to an external interlocutor device and the second antenna 122. Such a coupling location results preferably from an empirical determination. Such a coupling may be thus related to a shift with respect to the real second antenna 122 location. The empirical determination depends on an internal antenna type, like e.g. whether the second antenna 122 is planar or non-planar type, like a solenoid.

Alternately, instead of being comprised within the token 12, as separated entity, the local antenna is comprised within the phone 14.

The phone 14 is further configured to present, through a user interface, one or several information item(s), as first information item(s), about the coupling location.

The user interface is preferably the phone user interface, like the phone display screen 142 and/or the phone loudspeaker.

According to another embodiment, instead of the phone user interface, a user interface relating to a device that is connected to the phone 14, like e.g. a token 12 user interface, is used for presenting one or several information items about the coupling location.

The first information item(s) may include one or several visual information items.

Alternately or additionally, the first information item(s) may include one or several audio information items.

As audio information item(s), it may be one or several beep tones indicating where the second antenna 122 is coupled with an antenna comprised within an external CL device 100.

To determine the coupling location, the phone 14 gets or retrieves preferably an identifier(s) relating to the phone 14.

Alternatively or additionally, the phone 14 retrieves an identifier(s) relating to the token 12 when the token 12 incorporates the second antenna 122.

The phone identifier(s) may be of any type, like a phone manufacturer, a phone model name and/or an International Mobile station Equipment Identity (or IMEI).

The phone 14 stores preferably a database, as local database, including one or several phone identifiers that are, each, associated with a corresponding coupling location.

To retrieve the phone identifier(s), the phone 14 supports an application that allows querying the phone OS and/or an external entity, like a server 18.

To determine the coupling location, the phone 14 may get an identifier(s) relating to the token 12 that incorporates the second antenna 122.

The token identifier(s) may be of any type, like a token manufacturer, a token model name and/or a token identity number.

The phone 14 stores preferably within the local database, besides the phone identifiers, one or several token identifiers that are, each, associated with a corresponding coupling location.

According to a first alternative, instead of the phone 14, the token 12 stores a database, as local database, including one or several phone identifiers that are, each, associated with possibly one or several token identifiers and a corresponding coupling location.

According to a second alternative, instead of the phone 14, a server 18 stores a database, as remote database, including one or several phone identifiers that are, each, associated with possibly one or several token identifiers and a corresponding coupling location.

To retrieve the token identifier(s), the phone 14 is able to query the token 12.

The phone 14 is able to detect a power relating to a signal that the phone 14 receives from an external CL device 100 that comprises the first antenna 102.

The phone 14 is further configured to detect a presence of a sufficient power, at a place where the signal power is higher than a predetermined threshold, like a few Amp.m, e.g. 2 or 3 Amp.m. Such a power presence indicates that it is sufficiently high to allow an optimal CL communication between the token 12, as the device incorporating the second antenna 122, and the CL device 100.

The phone 14 is able to present, through a user interface, like the phone MMI or a MMI relating to a device that is connected to the phone 14, one or several information items, as second information item(s), about the sufficient power presence.

The second information item(s) may include one or several visual information items.

Alternately or additionally, the second information item(s) may include one or several audio information items.

As audio information item(s), it may be one or several beep tones with a sound level that is proportional to the detected signal power. A low sound level is emitted when the phone 14 detects a signal a power of which is lower than the predetermined threshold. Conversely, a high sound level is emitted when the phone 14 detects a signal a power of which is equal or higher than the predetermined threshold predetermined threshold.

The phone 14 is configured to authorize, only when information relating to at least the coupling location and possibly a sufficient power presence is presented, an execution of one or several CL applications that uses the second antenna 122 to communicate data. Otherwise, i.e. while the first information item(s) is(are) not presented to the user, the phone 14 does not authorize to run any CL application supported by the token 12 (or the phone 14).

The phone 14 comprises a third antenna 146, as wireless antenna, for exchanging data, through a Long Range (or LR) RF link 15, with a mobile radio-communication network 16.

The mobile radio-communication network 16 may be constituted by a Global Service for Mobiles (or GSM), a Universal Mobile Telecommunications System (or UMTS), a Code Division Multiple Access (or CDMA) and/or a Long Term Evolution (or LTE) type network(s).

The mobile radio-communication network list that is just herein above indicated is not exhaustive but only for exemplifying purposes.

The server 18 is accessible through the mobile radio-communication network 16 and/or through a communication network (not represented), like Internet or an Intranet, over an Access Point (not represented), like a Wifi hotspot.

The server 18 is identified preferably by data retrieved from either the phone 14 or the token memory.

The server 18, as addressee of information to be sent over the phone 14, may be identified by a Uniform Resource Identifier (or URI), like an Uniform Resource Locator (or URL), a call phone number of a server, a video-conference call phone number of a server, an Internet address and/or an email address of a server relating to a service provider, as server identifier(s).

The server 18 is connected, through a bi-directional wire link 17, to the mobile radio-communication network 16 and/or a communication network, like Internet (not represented).

The server 18 is hosted by a computer.

The server 18 is preferably dedicated to running an application for managing a remote database and communicating some information of the database to outside.

The server 18 includes or is connected to a memory 110 storing the remote database.

The server 18 manages the remote database.

The remote database contains a plurality of phone identifiers that are, each, associated with possibly one or several token identifiers and a corresponding coupling location.

The server 18 is preferably adapted to retrieve based on, as input(s), an identifier(s) relating to the phone 14 and possibly the token 12, the corresponding coupling location.

The server 18 is preferably adapted to issue data relating to one coupling location that is associated with a phone identifier and possibly a token identifier submitted from an external client device.

The server 18 may be further adapted to remotely personalize the local database supported at a client device, like the phone 14, so as to create or update information about a location relating to an antenna coupling involving an antenna that is embedded at the client device.

The server 18 may store or access data relating to a private key relating to the server 18, data relating to a public key associated with the private key, and/or data relating to a shared key relating to an external entity(ies), such as the phone 14 and/or the token 12.

The public key relating to the server 18 may be shared, possibly by the server 18 or through another server (not represented) connected to the server 18, between the phone 14 (and/or the token 12) and the server 18. The external entity is thus able to exchange data, in an encrypted manner, with the server 18.

The server 18 may obtain from different phone manufacturers their phone identifiers, their possibly associated token identifiers and their associated corresponding coupling locations. For instance, for one given phone identifier, several token identifiers may be connectable to the concerned phone and, for each connectable token, there is a single coupling location.

The server 18 may be operated by either a mobile radio-communication network operator or on its behalf, a bank operator and/or a service provider or on its behalf.

**Figure 2** depicts an example of a message flow 20 that involves the token 12, at a right side with respect to a dashed line 21, and the phone 14, at a left side with respect to the dashed line 21.

It is assumed that the phone 14 stores a local database including a plurality of phone identifiers that are, each, associated with only one coupling location.

It is also assumed that the token 12 incorporates the second antenna 122 and supports a plurality of CL applications.

It is further assumed that the phone 14 battery supplies energy to the token 12.

It is to be noted that the invention solution is valid for the two modes, namely a reader mode in which the phone 14 provides, over an electromagnetic field that the phone 14 generates, energy to the CL interlocutor device 100 and a card emulation mode in which the CL interlocutor device 100 provides, over an electromagnetic field that the CL device 100 generates, energy to the phone 14 and the token 12.

Optionally, before executing one CL application supported by the token 12, the token 12 checks whether or not the token user is the true user. To authenticate the token user, the token 12 verifies that data, such as a PIN, entered by the user does or does not match expected data stored within the token 12. Only if the token 12 has successfully authenticated the token user, then the token 12 allows triggering an execution of the CL application. Otherwise, i.e. if the user is not authenticated by the token 12, the token 12 forbids to run the CL application.

The token user who carries the phone 14 is sufficiently close to a CL interlocutor device 100.

The phone application 23 detects and analyses preferably a power of a signal received from the CL interlocutor device 100.

Optionally, as soon as the phone application 23 detects a signal power that is positive and smaller than a predetermined threshold, the phone application 23 sends to the phone OS 25 a message (not represented) including command for displaying, through the phone display screen 142, a default information item(s) about a non presence of a sufficient signal power and/or a command for emitting, through the phone loudspeaker, a default information item(s) about a non presence of a sufficient signal power.

A phone application 23 sends to the phone OS 25 a message 22 including a request for getting one (or several) identifier(s) relating to the phone 14.

The phone OS 25 reads the phone identifier(s) that the phone 14 stores.

The phone OS 25 sends back to the phone application a message 24 including the phone identifier, as request response.

The phone application 23 determines a coupling location based on the phone identifier. To determine a coupling location, the phone application 23 reads the local database in which a corresponding coupling location is associated with the concerned phone identifier. The coupling location constitutes preferably or is further associated with one or several information items, as first information item(s), about the coupling location.

The phone application 23 may convert the coupling location into a corresponding first information item(s) to be published, over a user interface, to the phone user.

Then, the phone application 23 sends to the phone OS 25 a message 26 including a command for displaying, through the phone display screen 142, the first information item(s) about a coupling location and/or a command for emitting, through the phone loudspeaker, the first information item(s) about a coupling location.

The phone 14 presents, through the phone user interface, the first information item(s).

The phone user knows automatically that the phone 14 is located in a place where the token 12 is present within an area in which a CL communication between the token 12 and the CL device 100 occurs.

As soon as the phone 14 detects a presence of a signal power that equals or exceeds the predetermined threshold, the phone application 23 sends to the phone OS 25 a message 28 including a command for displaying, through the phone display screen 142, a second information item(s) about a sufficient power presence and/or a command for emitting, through the phone loudspeaker, a second information item(s) about a sufficient power presence.

The phone 14 presents, through the phone user interface, the second information item(s).

The phone user knows automatically that the phone 14 is located in a place where the signal power is sufficient to allow an optimal CL communication between the token 12 and the CL device 100.

Then, the phone application 23 sends to the token 12 a command for launching an execution of a CL application, like a banking transaction, along with a CL Application IDentifier, like AID.

Finally, the token 12 and the CL device 100 exchange, over a CL channel, so as to offer a CL service to the phone user.

**Figure 3** **A** shows an example of an information item that is displayed by the phone 14 where there is a coupling location and an example of another information item where the signal power is not sufficiently high, so as to communicate in a CL manner.

The phone 14 is too far away from the CL device 100 (not represented).

The phone display screen 142 displays e.g. a cross 32 at a place where the coupling location, e.g. at the lower left-hand corner of the display screen 142, is when the phone 14 is present within an area where the electromagnetic field generated by the CL device is also present.

The phone display screen 142 displays e.g. one bar 34 that represents a level of power of a signal received by the phone 14 that is too low with respect to the predetermined threshold. The distance separating the phone 14 from the CL device 100 does not allow to let communicate, in a CL manner, the token 12 and the CL device 100.

**Figure 3** **B** shows an example of a first information item that is displayed by the phone 14 where there is a coupling location and an example of a second information item where the signal power is sufficiently high, so as to communicate in a CL manner.

The phone display screen 142 displays e.g. a circle 36, as first information item, surrounding the cross 32 at a place where the coupling location, e.g. at the lower left-hand corner of the display screen 142, is when the phone 14 is sufficiently close to the CL device 100 where the electromagnetic field generated by the CL device is present.

Instead of a circle 36, the first information item may be of any other kind, like a cross that is displayed in a colour, e.g. green, that is different from a cross colour, e.g. red while the phone 14 is not present within an area in which there is a coupling between the first antenna 102 and the second antenna 122.

The phone 14 is at a distance up to few centimetres, e.g. 2 or 3 cm, from the CL device 100 and is close enough to the CL device 100.

The phone display screen 142 displays e.g. a plurality of bars 38, as second information items, that represents a level of power of a signal received by the phone 14 that is high enough with respect to the predetermined threshold. The distance separating the phone 14 from the CL device 100 allows the token 12 and the CL device 100 to communicate, in a CL manner.

The invention solution therefore makes it easier to collaborate automatically with a phone user to place the phone 14 with respect to a CL device 100, so as to let this latter and the token 12 (or the phone 14 when the second antenna 122 is incorporated within the phone 14 instead of the token 12) communicate in a CL manner.

The invention solution is simple and therefore cheap to implement.

The invention solution is user friendly since the user is guided through a user interface(s), so as to place her/his phone 14 in a suited manner and thus allow a CL communication with a CL interlocutor device.

The embodiment that has just been described is not intended to limit the scope of the concerned invention. Other embodiments may be given. As another embodiment example, instead of getting directly a coupling location from the token hosting phone 14, the phone 14 gets the coupling location from either the token 12 or the server 18 that is connected to the phone 14 and that stores information about a location relating to an antenna coupling.

## Claims

1. A method (20) for accessing a contact-less service,
**characterized in that** the method comprises the following steps:
- a first device (14) determines information, as a coupling location, about a location relating to an antenna coupling, the antenna coupling involving an antenna comprised within either the first device or a second device (12) connected to the first device; and
- the first device presents, through a user interface (142), at least one information item, as first information item, about the coupling location.

2. Method according to claim 1, wherein the first device determines the coupling location based upon at least one identifier relating to the first or the second device.

3. Method according to claim 2, wherein, the first device storing at least one coupling location associated, each, with at least one identifier relating to the first device, a first device application (23) sends to a first device operating system (25) a request for getting an identifier relating to the first device, the first device operating system sends to the first device application the first device identifier.

4. Method according to claim 2, wherein, the first device storing at least one coupling location associated, each, with at least one identifier relating to the second device, the first device sends to the second device a request for getting an identifier relating to the second device, the second device sends to the first device the second device identifier.

5. Method according to claim 2 or 3, wherein, a remote server storing at least one coupling location associated, each, with at least one identifier relating to the first device, the first device sends to the remote server an identifier relating to the first device, the remote server sends to the first device the coupling location based upon the first device identifier.

6. Method according to any previous claim, wherein the method further comprises:
- the first device detects a sufficient power presence at a place where the first device receives a signal a power of which is higher than a predetermined threshold; and
- the first device presents, through the user interface, at least one information item (34), as second information item, about the sufficient power presence.

7. Method according to any previous claim, wherein, once at least the first information item is presented, the first device authorizes an execution of at least one contact-less application supported by either the first device or the second device.

8. Method according to any previous claim, wherein at least the first information item comprises at least one visual information item and/or at least one audio information item.

9. A first device (14) for accessing a contact-less service,
**characterized in that** the first device is adapted to:
- determine information, as a coupling location, about a location relating to an antenna coupling, the antenna coupling involving an antenna comprised within the first device; and
- present, through a user interface (142), at least one information item, as first information item, about the coupling location.

10. A system (10) for accessing a contact-less service,
**characterized in that,** the system comprising a first device (14) and at least one second device (12) connected to the first device, the first device is adapted to:
- determine information, as a coupling location, about a location relating to an antenna coupling, the antenna coupling involving an antenna comprised within the second device; and
- present, through a user interface, at least one information item, as first information item, about the coupling location.
